# EUROPÄISCHE PATENTSCHRIFT

(11) **EP 4 229 366 B1**
(45) Veröffentlichungstag und Bekanntmachung des Hinweises auf die Patenterteilung: **11.06.2025**
(21) Anmeldenummer: 21777676.4
(22) Anmeldetag: 13.09.2021
(51) Int. Cl.: G01F 25/10, G01F 1/66

(54) **VERFAHREN ZUR VERIFIKATION EINES CLAMP-ON-ULTRASCHALL-MESSGERÄTS**
METHOD FOR VERIFYING A CLAMP-ON ULTRASONIC MEASURING DEVICE
PROCÉDÉ DE VÉRIFICATION D'UN DISPOSITIF CLAMP-ON DE MESURE ULTRASONIQUE

(30) Priorität: 16.10.2020 DE 102020127360
(43) Veröffentlichungstag der Anmeldung: 23.08.2023
(73) Patentinhaber: Endress+Hauser Flowtec AG, 4153 Reinach (CH)
(72) Erfinder: FRÖHLICH, Thomas, 4142 Münchenstein (CH)
(74) Vertreter: Endress + Hauser Group Services (Deutschland) AG+Co. KG
(86) Internationale Anmeldenummer: PCT/EP2021/075129
(87) Internationale Veröffentlichungsnummer: WO 2022/078686

(56) Entgegenhaltungen:
- WO-A1-2020/126281
- DE-A1- 102015 106 897
- DE-A1- 102015 107 750
- US-A1- 2015 260 556

## Beschreibung

Die Erfindung betrifft ein Verfahren zur Verifikation eines Clamp-On-Ultraschall-Messgeräts der Mess- und Automatisierungstechnik, um einen Zustand des Messgeräts festzustellen.

Bei Clamp-On-Ultraschall-Messgeräten, wie in der DE102018133476A1 gezeigt, verändern sich im Laufe des Betriebs wie bei allen anderen Messgeräten auch Eigenschaften des Messgeräts an sich. Dies hat negative Eigenschaften auf eine Messleistung von solchen Messgeräten, weshalb die Messgeräte von Zeit zu Zeit eine Zustandsüberprüfung durchlaufen.

Die EP2607864B1 beschreibt ein Verfahren zur In-Line-Überprüfung eines Durchflussmessgeräts, bei welchem ein kalibriertes Clamp-On-Ultraschall-Messgerät in Reihe zu einem zu kalibrierenden Durchflussmessgerät angeordnet wird.

DE 10 2015 106 897 A1 beschreibt auch Verfahren zur Überprüfung eines Ultraschall-Durchflussmessers auf der Grundlage der Laufzeitdifferenz.

Für eine Zustandsüberprüfung wird das Clamp-On-Ultraschall-Messgerät an eine Norm-Messstrecke angebracht und Messergebnisse von Messgrößen werden ausgewertet.

Dabei wird geprüft, ob die Messwerte innerhalb eines Gültigkeitsbereichs liegen.

Die Überprüfung ist dabei zeitaufwändig, da die Messwerte zunächst auf ein Auswertegerät übertragen werden müssen, um dann die eigentliche Analyse zu starten.

Aufgabe der Erfindung ist es, eine einfache und robuste Verifikation eines Clamp-On-Ultraschall-Messgeräts vorzuschlagen.

Die Aufgabe wird gelöst durch ein Verfahren gemäß dem unabhängigen Anspruch 1 sowie durch ein Clamp-On-Ultraschall-Messgerät gemäß dem unabhängigen Anspruch 6.

Bei einem erfindungsgemäßen Verfahren zur Verifikation eines Clamp-On-Ultraschall-Messgeräts,
wobei das Messgerät umfasst:
zumindest zwei Ultraschallwandler eingerichtet zum Aussenden und Empfangen von Ultraschallsignalen,
eine elektronische Mess-/Betriebsschaltung eingerichtet zum Betreiben des mindestens einen Ultraschallwandlers sowie zum Bereitstellen von Messwerten mindestens einer Messgröße sowie zum Durchführen der Verifikation,
wobei die elektronische Mess-/Betriebsschaltung einen Speicher aufweist,
wobei das Verfahren folgende Schritte aufweist:
   Montieren des Messgeräts an einer Norm-Messstrecke; wobei die Norm-Messstrecke eine aus folgender Liste ist: Messblock, Messstab;
   Einschalten eines Verifikationsmodus der elektronischen Mess-/Betriebsschaltung; Aussenden von mindestens einem Ultraschallsignal mit mindestens einem Ultraschallwandler und Empfangen des Ultraschallsignals mit mindestens einem Ultraschallwandler;
   Erfassen von mindestens einem Messwert von mindestens einer Verifikationsgröße des Ultraschallsignals und Abgleich des Messwerts mit einem im Speicher hinterlegten Spezifikationswert der Verifikationsgröße;
   Ausgeben eines Verifikationsergebnisses;
   Beenden des Verifikationsmodus.

Auf diese Weise kann die Verifikation sehr viel schneller und einfacher erfolgen als bisher.

In einer Ausgestaltung des Verfahrens ist die Verifikationsgröße eine Messgröße aus folgender Liste:
Signalamplitude eines empfangenen Ultraschallsignals;
Signallaufzeit eines Ultraschallsignals;
Schallgeschwindigkeit;
Laufzeitdifferenz zweier Ultraschallsignale, welche von zwei Ultraschallwandlern paarweise ausgesendet und empfangen werden, insbesondere ohne Vorliegen eines fließenden Mediums;
Signal-Rausch-Abstand;
Signalform gegeben beispielsweise durch eine Anstiegszeit, Abfallzeit, Amplitude, Frequenz;
Korrelation zwischen einem empfangenen Ultraschallsignal und einem erwarteten Ultraschallsignal.

Ein Messrohr kann dabei ohne Flüssigkeit, teilgefüllt oder vollständig mit einer Flüssigkeit gefüllt sein. Mit einem Messblock oder Messstab können sehr einfach das Einhalten von Sollwerten überprüft werden.

In einer Ausgestaltung des Verfahrens ist die Messstrecke zumindest aus einem der folgenden Materialien gefertigt ist:
Kunststoff, Metall.

Durch Wahl eines geeigneten Materials können die Messstrecke und die Ultraschallwandler aufeinander abgestimmt werden. Somit können beispielsweise Übertragungsverluste durch Grenzflächenreflektionen gemindert werden.

In einer Ausgestaltung des Verfahrens umfasst das Verifikationsergebnis einen Verlauf von Messwerten bezüglich einer Spezifikationsgröße.

Somit kann eine Aussage über eine Stabilität eines Zustands des Messgeräts getroffen werden.

In einer Ausgestaltung des Verfahrens beinhaltet das Verifikationsergebnis eine Vorhersage bezüglich einer Mindestbetriebszeit bis zu einem Verlassen eines Sollzustands.

Auf diese Weise kann eine erneute Verifikation des Messgeräts vorausgeplant werden. Im Folgenden wird die Erfindung anhand von Ausführungsbeispielen beschrieben.
Fig. 1 beschreibt einen Ablauf eines beispielhaften erfindungsgemäßen Verfahrens zur Verifikation des Clamp-On-Ultraschall-Messgeräts;
Fig. 2 zeigt ein beispielhaftes erfindungsgemäßes Clamp-On-Ultraschall-Messgerät;
Fig. 3 zeigt einen beispielhaften Ultraschallwandler;
Figs. 4 b) bis c) zeigen beispielhafte Norm-Messstrecken zur Umsetzung des Verfahrens.

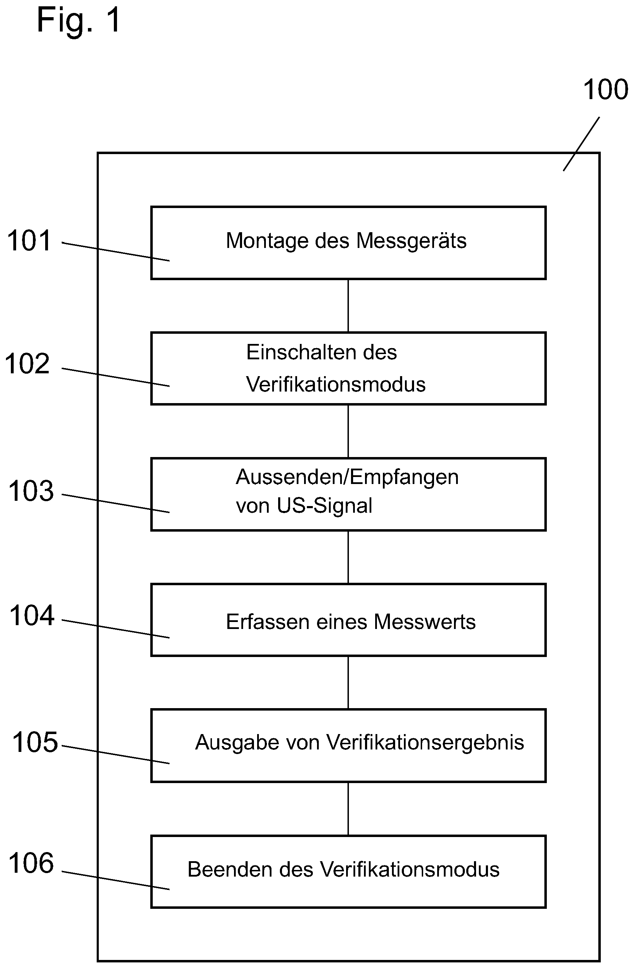

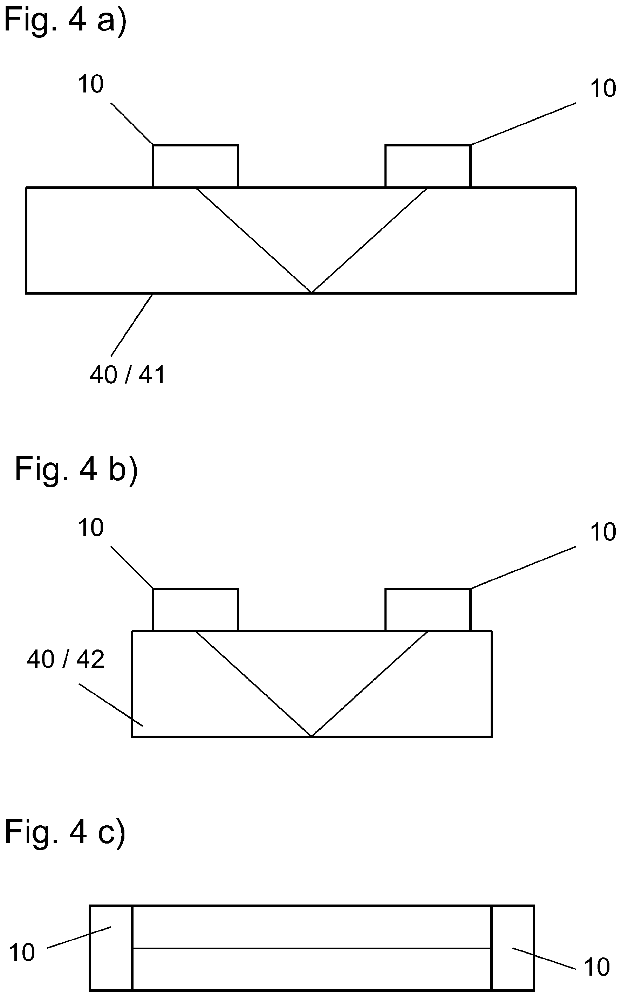

Fig. 1 beschreibt einen Ablauf eines beispielhaften erfindungsgemäßen Verfahrens 100, bei welchem in einem ersten Verfahrensschritt 101 das Clamp-On-Ultraschall-Messgerät (1) an einer Norm-Messstrecke 40 montiert wird, welche Norm-Messstrecke beispielsweise durch ein Messrohr 41, einen Messblock 42 oder einen Messstab 43 ausgebildet sein kann, siehe Figs. 4 b) bis c).

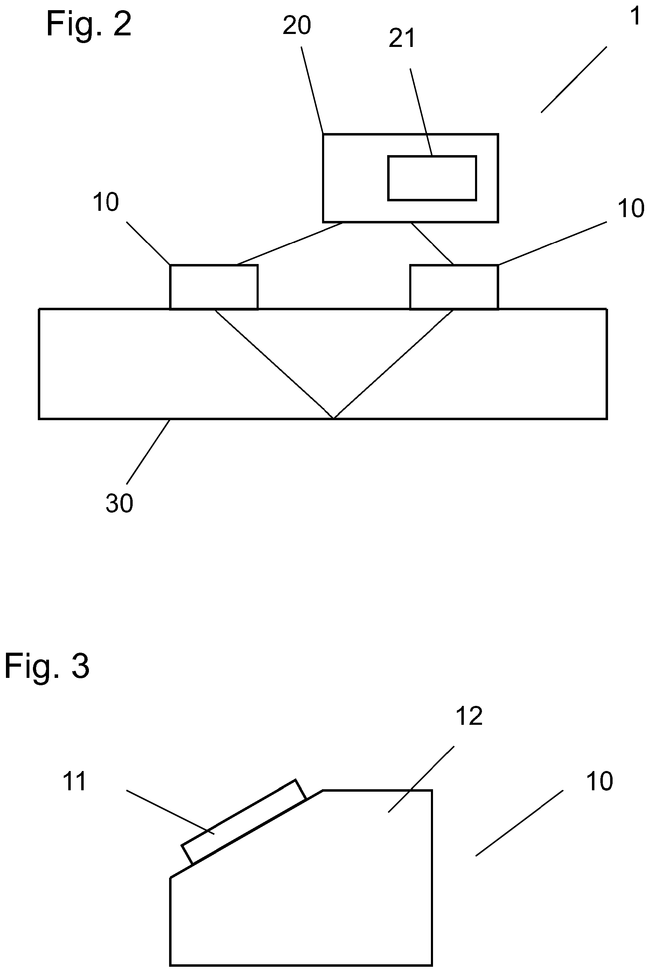

In einem zweiten Verfahrensschritt 102 wird bei einer elektronischen Mess-/Betriebsschaltung 20 des Clamp-On-Ultraschall-Messgeräts (siehe Fig. 2) ein Verifikationsmodus eingeschaltet. Dabei können beispielsweise Parameter einer letztgenutzten Messstelle abgespeichert werden, damit das Clamp-On-Ultraschall-Messgerät im Falle eines positiven Verifikationsergebnisses ohne Aufwand bei dieser Messstelle neu eingerichtet werden kann.

In einem dritten Verfahrensschritt 103 wird mindestens Ultraschallwandler 10 des Clamp-On-Ultraschall-Messgeräts dazu veranlasst, mindestens ein Ultraschallsignal auszusenden und mindestens ein Ultraschallwandler dazu veranlasst, das mindestens eine Ultraschallsignal zu empfangen.

In einem vierten Verfahrensschritt 104 wird das empfangene Ultraschallsignal durch die elektronische Mess-/Betriebsschaltung ausgewertet, um einen mindestens einen Messwert mindestens einer Verifikationsgröße des Ultraschallsignals zu bestimmen.

Eine Verifikationsgröße zum Bestimmen eines Zustands des Clamp-On-Ultraschall-Messgeräts ist eine Messgröße beispielsweise aus folgender Liste:
Signalamplitude eines empfangenen Ultraschallsignals;
Signallaufzeit eines Ultraschallsignals;
Schallgeschwindigkeit;
Laufzeitdifferenz zweier Ultraschallsignale, welche von zwei Ultraschallwandlern paarweise ausgesendet und empfangen werden, insbesondere ohne Vorliegen eines fließenden Mediums;
Signal-Rausch-Abstand;
Signalform gegeben beispielsweise durch eine Anstiegszeit, Abfallzeit, Amplitude, Frequenz;
Korrelation zwischen einem empfangenen Ultraschallsignal und einem erwarteten Ultraschallsignal.

Der Fachmann ist nicht auf diese Liste beschränkt und kann auch weitere Verifikationsgrößen heranziehen.

Es wird dann überprüft, ob der mindestens eine Messwert innerhalb eines Sollbereichs liegt. Bei einer Bestimmung von Messwerten mehrerer Verifikationsgrößen wird entsprechend geprüft, ob alle Messwerte innerhalb zugehöriger Sollbereiche liegen. Dabei wird auf mindestens einen in einem Speicher / in einer Speichereinheit der elektronischen Mess-/Betriebsschaltung hinterlegten Spezifikationswert zurückgegriffen.

Mit Abschluss der Überprüfung wird in einem fünften Verfahrensschritt 105 ein Verifikationsergebnis ausgegeben. Das Verifikationsergebnis kann beispielweise wiedergeben, ob das Clamp-On-Ultraschall-Messgerät weiter eingesetzt werden kann oder nicht. In einer Ausgestaltung des Verfahrens kann hierbei durch eine erweiterte Auswertung des mindestens einen Messwerts eine Mindestbetriebszeit des Clamp-On-Ultraschall-Messgeräts bestimmt werden, so dass eine neue Verifikation des Clamp-On-Ultraschall-Messgeräts im Voraus geplant werden kann. Die erweiterte Auswertung kann dabei beispielsweise auf Abstände der Messwerte von Grenzwerten der zugehörigen Sollbereiche basieren. Falls mehrere Verifikationsgrößen zur Verifikation herangezogen werden, kann ein Verifikationsergebnis beispielsweise mittels eines trainierten neuronalen Netzes bestimmt werden, wobei ein Training des Netzes mittels Eingabe von bekannten Messwerten von Verifikationsgrößen sowie zugehörigem Zustand / Status des Clamp-On-Ultraschall-Messgeräts durchführbar ist.

In einem sechsten Verfahrensschritt 106 wird der Verifikationsmodus beendet und bei positivem Resultat das Clamp-On-Ultraschall-Messgerät für den erneuten Einsatz bei einer Messstelle vorbereitet.

Fig. 2 skizziert ein beispielhaftes erfindungsgemäßes Clamp-On-Ultraschall-Messgerät 1 mit zwei Ultraschallwandlern 10, welche an einer Außenseite eines Messrohrs 30 montiert sind, sowie einer elektronischen Mess-/Betriebsschaltung 20 zum Betreiben der Ultraschallwandler und zum Bereitstellen von Messwerten von mindestens einer Eigenschaft eines im Messrohr befindlichen Mediums. Die Medieneigenschaft kann dabei beispielsweise eine der folgenden Messgrößen sein: Schallgeschwindigkeit, Durchflussgeschwindigkeit, Volumendurchfluss, weiteres.

Die elektronische Mess-/Betriebsschaltung weist dabei erfindungsgemäß eine Speichereinheit 21 auf, in welcher zumindest ein Spezifikationswert abgelegt ist, so dass das erfindungsgemäße Verfahren durchgeführt werden kann.

Die Funktionsweise von Clamp-On-Ultraschall-Messgeräten an sich ist dem Fachmann bekannt.

Fig. 3 zeigt einen beispielhaften Ultraschallwandler 10, welcher ein Wandlerelement 11, insbesondere ein Piezoelement aufweist, welches an einem Koppelelement / Ultraschallübertrager 12 angeordnet ist. Das Koppelelement / der Ultraschallübertrager wird dabei über einer dem Wandlerelement abgewandten Seite mit dem Messrohr 30 kontaktiert und ist dazu eingerichtet Ultraschallsignale zwischen Wandlerelement und Messrohr und umgekehrt zu übertragen.

Figs. 4 b) bis c) skizzieren beispielhafte Norm-Messstrecken 40, mittels welchen das Clamp-On-Ultraschall-Messgerät und insbesondere die Ultraschallwandler des Clamp-On-Ultraschall-Messgeräts im Sinne des erfindungsgemäßen Verfahrens verifiziert werden können.

Fig. 4 a) zeigt eine nicht erfindungsgemäße Norm-Messstrecke mit einem Messrohr 41, an welchem die Ultraschallwandler 10 angebracht sind. Wie hier skizziert kann die Anordnung so ausgestaltet sein, dass ein Ultraschallsignal auf einer den Ultraschallwandler gegenüberliegenden Seite des Messrohrs 41 an einer Wandung des Messrohrs einfach reflektiert wird. Da das Messrohr ausschließlich zu Verifikationszwecken benutzt wird, behält es seine Eigenschaften bei und kann daher wiederholt zur Verifikation herangezogen werden. Das Messrohr kann dabei zur Verifikation mit einem flüssigen Medium zumindest teilgefüllt werden. Bei einem Messrohr als Norm-Messtrecke finden mehrere Ultraschallsignalreflektionen an verschiedenen Grenzflächen zweier verschiedener Medien statt, so dass zur Verifikation mehrere

Ultraschallsignalreflektionen herangezogen werden können.

Fig. 4 b) zeigt eine Norm-Messtrecke mit einem Messblock 42. Bei einem Messblock findet eine Ultraschallsignalreflektion hauptsächlich an Grenzflächen zwischen einer Umgebung des Messblocks und dem Messblock statt. Dies führt zu einer deutlicheren und weniger verrauschten Ultraschallsignal bei einem empfangenden Ultraschallwandler.

Fig. 4 c) skizziert eine Normmessstrecke mit einem Messstab 43, wobei die Ultraschallwandler an entgegengesetzten Enden des Messstabs angeordnet sind. In diesem Fall erfährt das Ultraschallsignal keine Reflektion, sondern wird über den Messstab direkt, also ohne Umlenkung zwischen den Ultraschallwandlern übertragen.

### Bezugszeichenliste

- 1: Clamp-On-Ultraschall-Messgerät
- 10: Ultraschallwandler
- 11: Wandlerelement
- 12: Koppelkörper
- 20: elektronische Mess-Betriebsschaltung
- 21: Speichereinheit
- 30: Messrohr
- 40: Norm-Messstrecke
- 41: Messrohr
- 42: Messblock
- 43: Messstab
- 100: Verfahren
- 101: erster Verfahrensschritt
- 102: zweiter Verfahrensschritt
- 103: dritter Verfahrensschritt
- 104: vierter Verfahrensschritt
- 105: fünfter Verfahrensschritt
- 106: sechster Verfahrensschritt

## Patentansprüche

1. Verfahren (100) zur Verifikation eines Clamp-On-Ultraschall-Messgeräts (1),
wobei das Messgerät umfasst:
zumindest zwei Ultraschallwandler (10) eingerichtet zum Aussenden und Empfangen von Ultraschallsignalen,
eine elektronische Mess-/Betriebsschaltung (20) eingerichtet zum Betreiben des mindestens einen Ultraschallwandlers sowie zum Bereitstellen von Messwerten mindestens einer Messgröße sowie zum Durchführen der Verifikation,
wobei die elektronische Mess-/Betriebsschaltung eine Speichereinheit (21) aufweist,
wobei das Verfahren folgende Schritte aufweist:
Montieren des Messgeräts an einer Norm-Messstrecke (30) in einem ersten Verfahrensschritt (101),
wobei die Norm-Messstrecke (40) eine aus folgender Liste ist:
Messblock (42), Messstab (43);
Einschalten eines Verifikationsmodus der elektronischen Mess-/Betriebsschaltung in einem zweiten Verfahrensschritt (102);
Aussenden von mindestens einem Ultraschallsignal mit mindestens einem Ultraschallwandler und Empfangen des Ultraschallsignals mit mindestens einem Ultraschallwandler in einem dritten Verfahrensschritt (103);
Bestimmen von mindestens einem Messwert von mindestens einer Verifikationsgröße des Ultraschallsignals und Abgleich des Messwerts mit mindestens einem in der Speichereinheit hinterlegten Spezifikationswert der Verifikationsgröße in einem vierten Verfahrensschritt (104);
Ausgeben eines Verifikationsergebnisses in einem fünften Verfahrensschritt (105);
Beenden des Verifikationsmodus in einem sechsten Verfahrensschritt (106).

2. Verfahren nach Anspruch 1,
wobei die Verifikationsgröße eine Größe aus folgender Liste ist:
Signalamplitude eines empfangenen Ultraschallsignals;
Signallaufzeit eines Ultraschallsignals;
Schallgeschwindigkeit;
Laufzeitdifferenz zweier Ultraschallsignale, welche von zwei Ultraschallwandlern paarweise ausgesendet und empfangen werden, insbesondere ohne Vorliegen eines fließenden Mediums;
Signal-Rausch-Abstand;
Signalform gegeben beispielsweise durch eine Anstiegszeit, Abfallzeit, Amplitude, Frequenz;
Korrelation zwischen einem empfangenen Ultraschallsignal und einem erwarteten Ultraschallsignal.

3. Verfahren nach Anspruch 1 oder 2,
wobei die Norm-Messstrecke (40) zumindest aus einem der folgenden Materialien gefertigt ist:
Kunststoff, Metall.

4. Verfahren nach einem der vorigen Ansprüche,
wobei das Verifikationsergebnis einen Verlauf von Messwerten bezüglich einer Spezifikationsgröße umfasst.

5. Verfahren nach einem der vorigen Ansprüche,
wobei das Verifikationsergebnis eine Vorhersage bezüglich einer Mindestbetriebszeit bis zu einem Verlassen eines Sollzustands beinhaltet.

6. Clamp-On-Ultraschall-Messgerät (1) eingerichtet zur Umsetzung des Verfahrens nach einem der vorigen Ansprüche umfassend:
zumindest zwei Ultraschallwandler (10) eingerichtet zum Aussenden und Empfangen von Ultraschallsignalen, welche an einem Messrohr montiert oder montierbar sind,
eine elektronische Mess-/Betriebsschaltung (20) eingerichtet zum Betreiben des mindestens einen Ultraschallwandlers sowie zum Bereitstellen von Messwerten mindestens einer Messgröße sowie zum Durchführen der Verifikation,
wobei die elektronische Mess-/Betriebsschaltung eine Speichereinheit (21) aufweist, in welcher mindestens ein Spezifikationswert abgespeichert ist.

## Claims

1. Method (100) for verifying a clamp-on ultrasonic measuring device (1),
where the measuring device comprises:
at least two ultrasonic transducers (10) for transmitting and receiving ultrasonic signals,
an electronic measuring/operating circuit (20) set up for operating the at least one ultrasonic transducer and for providing measured values of at least one measured variable and for carrying out the verification,
wherein the electronic measuring/operating circuit has a memory unit (21),
wherein the method comprises the following steps:
Mounting the measuring device on a standard measuring section (30) in a first process step (101),
wherein the standard measuring range (40) is one from the following list:
measuring block (42), measuring rod (43);
Switching on a verification mode of the electronic measuring/operating circuit in a second method step (102);
Transmitting at least one ultrasonic signal with at least one ultrasonic transducer and receiving the ultrasonic signal with at least one ultrasonic transducer in a third method step (103);
Determination of at least one measured value of at least one verification variable of the ultrasonic signal and comparison of the measured value with at least one specification value of the verification variable stored in the memory unit in a fourth method step (104);
Outputting a verification result in a fifth method step (105);
Ending the verification mode in a sixth process step (106).

2. Method according to claim 1,
wherein the verification variable is a variable from the following list:
Signal amplitude of a received ultrasonic signal;
Signal propagation time of an ultrasonic signal;
Speed of sound;
Time difference between two ultrasonic signals which are transmitted and received in pairs by two ultrasonic transducers, in particular without the presence of a flowing medium;
Signal-to-noise ratio;
Signal shape given, for example, by a rise time, fall time, amplitude, frequency;
Correlation between a received ultrasonic signal and an expected ultrasonic signal.

3. Method according to claim 1 or 2,
wherein the standard measuring section (40) is made of at least one of the following materials:
Plastic, metal.

4. Method according to any of the preceding claims,
wherein the verification result comprises a progression of measured values relating to a specification variable.

5. Method according to any of the preceding claims,
wherein the verification result contains a prediction regarding a minimum operating time until a target state is exited.

6. Clamp-on ultrasonic measuring device (1) adapted to implement the method according to any one of the preceding claims:
at least two ultrasonic transducers (10) set up for emitting and receiving ultrasonic signals, which are mounted or can be mounted on a measuring tube,
an electronic measuring/operating circuit (20) set up for operating the at least one ultrasonic transducer and for providing measured values of at least one measured variable and for carrying out the verification,
wherein the electronic measuring/operating circuit has a memory unit (21) in which at least one specification value is stored.

## Revendications

1. Procédé (100) de vérification d'un appareil de mesure à ultrasons de type "clamp-on" (1),
dans lequel l'instrument de mesure comprend
au moins deux transducteurs d'ultrasons (10) aménagés pour émettre et recevoir des signaux ultrasonores,
un circuit électronique de mesure/d'exploitation (20) aménagé pour exploiter le au moins un transducteur à ultrasons ainsi que pour fournir des valeurs de mesure d'au moins une grandeur de mesure ainsi que pour effectuer la vérification,
dans lequel le circuit électronique de mesure/fonctionnement comprend une unité de mémoire (21),
le procédé comprenant les étapes suivantes :
le montage de l'appareil de mesure sur une section de mesure normalisée (30) dans une première étape de procédé (101),
la distance de mesure normalisée (40) étant une distance choisie dans la liste suivante :
bloc de mesure (42), jauge (43) ;
activation d'un mode de vérification du circuit électronique de mesure/fonctionnement au cours d'une deuxième étape du procédé (102) ;
émission d'au moins un signal ultrasonore avec au moins un transducteur ultrasonore et la réception du signal ultrasonore avec au moins un transducteur ultrasonore dans une troisième étape de procédé (103) ;
détermination d'au moins une valeur de mesure d'au moins une grandeur de vérification du signal ultrasonore et la comparaison de la valeur de mesure avec au moins une valeur de spécification de la grandeur de vérification stockée dans l'unité de mémoire dans une quatrième étape de procédé (104) ;
émettre un résultat de vérification dans une cinquième étape de procédé (105);
sortie du mode de vérification dans une sixième étape de procédé (106).

2. Procédé selon la revendication 1,
où la grandeur de vérification est une grandeur de la liste suivante :
Amplitude d'un signal ultrasonore reçu ;
Temps de propagation d'un signal ultrasonore ;
Vitesse du son ;
Différence de temps de propagation de deux signaux ultrasonores émis et reçus par paires par deux transducteurs ultrasonores, notamment en l'absence d'un milieu fluide ;
Rapport signal-bruit ;
Forme du signal donnée par exemple par un temps de montée, un temps de descente, une amplitude, une fréquence ;
Corrélation entre un signal ultrasonore reçu et un signal ultrasonore attendu.

3. Procédé selon la revendication 1 ou 2,
la distance de mesure normalisée (40) étant fabriquée à partir d'au moins l'un des matériaux suivants :
Plastique, métal.

4. Procédé selon l'une quelconque des revendications précédentes,
dans lequel le résultat de la vérification comprend un historique de valeurs mesurées par rapport à une grandeur de spécification.

5. Procédé selon l'une des revendications précédentes,
dans lequel le résultat de la vérification comprend une prédiction concernant un temps de fonctionnement minimum avant de quitter un état cible.

6. Appareil de mesure à ultrasons Clamp-On (1) aménagé pour la mise en œuvre du procédé selon l'une des revendications précédentes comprenant :
au moins deux transducteurs ultrasonores (10) aménagés pour émettre et recevoir des signaux ultrasonores, qui sont montés ou peuvent être montés sur un tube de mesure,
un circuit électronique de mesure/d'exploitation (20) aménagé pour exploiter le au moins un transducteur à ultrasons ainsi que pour fournir des valeurs de mesure d'au moins une grandeur de mesure ainsi que pour effectuer la vérification,
dans lequel le circuit électronique de mesure/fonctionnement présente une unité de mémoire (21) dans laquelle au moins une valeur de spécification est mémorisée.
